(19) Europäisches Patentamt
European Patent Office
Office européen des brevets

(11) Veröffentlichungsnummer: **0 050 290**
**B1**

# (12) EUROPÄISCHE PATENTSCHRIFT

(45) Veröffentlichungstag der Patentschrift: **12.12.84**

(51) Int. Cl.³: **C 01 B 21/086**, C 01 B 21/093

(21) Anmeldenummer: **81108218.9**

(22) Anmeldetag: **12.10.81**

(54) **Verfahren zur Herstellung von Alkalisalzen der Imidodisulfonsäure.**

(30) Priorität: **16.10.80 DE 3039021**

(43) Veröffentlichungstag der Anmeldung: **28.04.82 Patentblatt 82/17**

(45) Bekanntmachung des Hinweises auf die Patenterteilung: **12.12.84 Patentblatt 84/50**

(84) Benannte Vertragsstaaten: **BE DE FR GB IT NL**

(56) Entgegenhaltungen:
**DE - A - 1 767 201**

**CHEMICAL ABSTRACTS, Band 84, Nr. 14, 5. April 1976, Seite 138, Nr. 92320q, rechte Spalte, Columbus, Ohio, U.S.A.**
**CHEMICAL ABSTRACTS, Band 84, Nr. 6, 9. Februar 1976, Seite 141, Nr. 33326y Columbus, Ohio, U.S.A.**
**Comprehensive Inorganic Chemistry J.C. Bailar et al. Pergamon (Oxford) S. 911 to 914**

(73) Patentinhaber: **HOECHST AKTIENGESELLSCHAFT, Postfach 80 03 20, D-6230 Frankfurt am Main 80 (DE)**

(72) Erfinder: **Rieck, Hans-Peter, Dr., Freiherr-vom-Stein-Strasse 37, D-6233 Kelkheim (Taunus) (DE)**

EP 0 050 290 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung betrifft ein Verfahren zur Herstellung von Alkalisalzen der Imidodisulfonsäure oder eines Gemisches von Alkalisalzen der Imidodisulfonsäure und der Nitrilotrisulfonsäure, sowie gegebenenfalls Amidosulfonsäure und Schwefelsäure, durch Umsetzung von Ammonium-Nitrilotrisulfonat mit Alkalihydroxiden.

Alkalisalze der Nitrilotrisulfonsäure und der Imidodisulfonsäure sind als Builder in Waschmitteln geeignet (JA-A-77-52 904, JA-A-77-72 709, DE-A-2 545 611 und DE-A-2 665 181). Besondere Bedeutung haben dabei die Natriumsalze.

Die Herstellung von Natrium-Nitrilotrisulfonat durch Umsetzung von Natriumbisulfit mit nitrosen Gasen ist Stand der Technik. Das Produkt läßt sich jedoch wegen seiner guten Löslichkeit nur schwer von Sulfit abtrennen; darüber hinaus sind die Ausbeuten gering. Nach den Angaben der japanischen Offenlegungsschrift 75-83 297 läßt sich Natrium-Nitrilotrisulfonat auch dadurch herstellen, daß zu Ammonium-Nitrilotrisulfonat ein berechneter Überschuß an Natriumhydroxid zugefügt wird. Nach dem einzigen Ausführungsbeispiel wird zu einer wäßrigen Lösung von Ammonium-Nitrilotrisulfonat die vierfach molare Menge NaOH gegeben. Durch Abdampfen bei 60°C unter vermindertem Druck wird Ammoniak vollständig ausgetrieben und eine alkalische Lösung von Natrium-Nitrilotrisulfonat gewonnen.

Das Natriumsalz der Imidisulfonsäure läßt sich durch Umsetzung von Natriumnitrit- und Natriumcarbonat-Lösung mit $SO_2$ herstellen (J. Chem. Soc., 1892, 954) oder durch Umsetzung von Natriumbisulfit mit nitrosen Gasen (JA-A-77-48 593). Wie bei der analogen Darstellung des Natrium-Nitrilotrisulfonats ist jedoch die Ausbeute gering und das Abtrennen des Produktes schwierig. Aus JA-A-75-87 981 sowie aus Nippon Kagaku Kaishi, 1975, 1160, ist bekannt, daß bei der Umsetzung des Ammoniumsalzes der Imidodisulfonsäure mit Natronlauge oder Kalilauge die Natriumsalze bzw. Kaliumsalze der Imidodisulfonsäure erhalten werden.

Das Ammonium-Nitrilotrisulfonat ist wegen seiner Schwerlöslichkeit besser und reiner herstellbar als die entsprechende Natriumverbindung. Andererseits sind Ammoniumsalze als Zusätze zu alkalischen Waschmitteln wegen der Abspaltung von Ammoniak beim Waschvorgang wenig geeignet.

Es bestand daher die Aufgabe ein verbessertes Verfahren zur Herstellung von Alkalisalzen der Imidodisulfonsäure, ausgehend von Ammonium-Nitrilotrisulfonat zu schaffen.

Es wurde nun ein Verfahren zur Herstellung von Alkalisalzen der Imidodisulfonsäure oder eines Gemisches von Alkalisalzen der Imidodisulfonsäure und der Nitrilotrisulfonsäure, Amidosulfonsäure und Schwefelsäure aus Ammoniumnitrilotrisulfonat gefunden, das dadurch gekennzeichnet ist, daß man Ammoniumnitrilotrisulfonat in fester oder gelöster Form zu einer wäßrigen Lösung von Alkalihydroxid gibt, die mindestens 3 Mol Alkalihydroxid pro Mol zuzugebendes Ammoniumnitrilotrisulfonat enthält, und umsetzt. Alkali-Nitrilotrisulfonat eignet sich ebenso wie Alkali-Imidodisulfonat als Builder für Waschmittel. Die Alkalisalze der Amidosulfonsäure und Schwefelsäure stellen Verunreinigungen dar, die aber in Waschmitteln nicht stören. Ihr Auftreten hängt im wesentlichen von den Bedingungen der Aufarbeitung des Umsetzungsgemisches ab.

Die Möglichkeit, Nitrilotrisulfonate zu Imidodisulfonaten zu hydrolysieren ist grundsätzlich bekannt. So wird in J. C. Bailar et al. »Comprehensive Inorganic Chemistry«, Bd. II (Oxford, 1973), S. 914 darauf hingewiesen, daß die Stabilität des $N(SO_3)_3^{3-}$-Ions in Wasser nicht sehr groß ist, da die bei der Hydrolyse gebildeten Protonen die Zersetzung nach folgender Gleichung autokatalysieren.

$$N(SO_3)_3^{3-} + H_2O = HN(SO_3)_2^{2-} + HSO_4^{-}$$

In der DE-A-1 767 201 wird beschrieben, wie durch Hydrolyse des Nitrilotrisulfonats in Gegenwart starker Säuren, wie beispielsweise Salpetersäure, Amidosulfonsäure hergestellt werden kann. Andererseits wird in der JA-A-50-83 297 angegeben, daß Natriumnitrilosulfonat erhalten wird, wenn ein berechneter Überschuß an Natriumhydroxid zu Ammoniumnitrilotrisulfonat hinzugefügt und durch Abdampfen im Vakuum bei Temperaturen unter 70°C das $NH_3$ vollständig ausgetrieben wird. Auf diese Weise soll eine alkalische wäßrige Lösung von Natriumnitrilosulfonat erhalten werden, die außer diesem nur geringe Mengen NaOH enthält. Nach diesen Literaturstellen konnte eine Hydrolyse des Nitrilotrisulfonats zu Imidodisulfonat in alkalischem Medium nicht ohne weiteres erwartet werden.

Da unter alkalischen Bedingungen die Hydrolyse des Trisulfonats zu Imidodisulfonat wesentlich langsamer verläuft als in Gegenwart von Säure, ist eine autokatalytische Beschleunigung der Zersetzung des Nitrilotrisulfonats durch freiwerdende Wasserstoffionen beim erfindungsgemäßen Verfahren ausgeschlossen.

Bei tiefen Temperaturen und/oder kurzen Reaktionszeiten (wenige Minuten) lassen sich im Reaktionsprodukt noch nennenswerte Mengen an kali-Nitrilotrisulfonat nachweisen, die gemäß folgender Gleichung gebildet werden (wobei M ein Alkalimetall bedeutet).

$$N(SO_3NH_4)_3 + 3\,MOH = N(SO_3M)_3 + 3\,NH_3 + 3\,H_2O$$

Darüber hinaus kommt es aber auch schon zur Hydrolyse der Schwefel-Stickstoff-Bindung gemäß

folgender Gleichung

$$N(SO_3M)_3 + 2\ MOH = MN(SO_3M)_2 + M_2SO_4 + H_2O$$

Diese Hydrolyse verläuft bei erhöhter Reaktionstemperatur (oberhalb 50° C, noch schneller oberhalb 70° C) und/oder längerer Reaktionszeit praktisch vollständig. Durch weiter fortschreitende Hydrolyse gemäß der Gleichung

$$MN(SO_3M)_2 + H_2O = NH_2SO_3M + M_2SO_4$$

entsteht Sulfamat, das als Builder wertlos ist. Durch Einhaltung kurzer Reaktionszeiten kann diese Folgereaktion jedoch weitgehend verhindert werden.

Als Ammonium-Nitrilotrisulfonat kann die reine Verbindung eingesetzt werden oder ein Rohprodukt, das durch andere Ammoniumsalze, beispielsweise Ammonium-Imidodisulfonat, Ammoniumbisulfat und Ammoniumsulfit, verunreinigt ist (Rohprodukt der Herstellung von Nitrilotrisulfonat aus Nitrit und Ammoniumsulfit). Ammonium-Nitrilotrisulfonat kann in wasserfreier Form, als feuchter Feststoff oder als wäßrige Lösung eingesetzt werden, wobei die wäßrige Lösung ammoniakalisch abgepuffert sein muß, um ein rasches Absinken des pH-Werts und damit eine rasche Hydrolyse zu vermeiden. Diese wäßrige Lösung wird daher in der Regel nicht aus festem Ammonium-Nitrilotrisulfonat hergestellt. Es ist jedoch möglich, wäßrige Mutterlaugen der Herstellung von Ammonium-Nitrilotrisulfonat nach diesem Verfahren aufzuarbeiten.

Bevorzugtes Ausgangsmaterial ist das Trisulfonat, das bei der Umsetzung von ammoniakalischer Sulfitlösung mit nitrosen Gasen gemäß DE-A-1 767 201 auf einfache Weise und in großen Mengen erhältlich ist. Ein Sulfitanteil im Ausgangsmaterial läßt sich durch Oxidation, beispielsweise mit Wasserstoffperoxid oder Peroxidisulfat, in Sulfat überführen. Diese Reaktion kann vor, während oder nach der erfindungsgemäßen Umsetzung mit Alkalihydroxid erfolgen.

Die Konzentration des eingesetzten Alkalihydroxids ist nicht kritisch. Bevorzugt wird möglichst konzentriert gearbeitet, damit direkt hohe Anteile fester Reaktionsprodukte erhalten werden. Die Reaktion kann auch in Gegenwart eines mit Wasser unbegrenzt mischbaren organischen Lösungsmittels (Beispiel: niedere Alkohole, Aceton) durchgeführt werden, wodurch die Löslichkeit der Alkalisalze in Wasser verringert wird. Das Ammonium-Nitrilotrisulfonat kann auf einmal der Lösung des Alkalihydroxids zugesetzt werden; bevorzugt wird jedoch eine gleichmäßige Zugabe kleiner Portionen.

Die gewählte Reaktionstemperatur richtet sich nach der gewünschten Produktzusammensetzung und der mittleren Verweilzeit des Produktes. Die untere Temperaturgrenze für die Umsetzung ist durch den Erstarrungspunkt der Alkalihydroxid-Lösung festgelegt; die obere Grenze erfolgt aus der Siedetemperatur der Reaktionsmischung. Bevorzugt sind Temperaturen von 20 bis 120, insbesondere 40 bis 100° C. Je nach Art der Zugabe der Reaktionsteilnehmer wird die gewünschte Reaktionstemperatur durch Heizen oder Kühlen eingehalten.

Die Umsetzung verläuft bei Temperaturen von etwa 85 bis 100° C nach dem Auflösen des Ammonium-Nitrilotrisulfonats in der Reaktionsmischung spontan, und es werden bei sehr feinteiligem Feststoff nur Reaktionszeiten von wenigen Sekunden benötigt. Es ist jedoch bevorzugt, zur Vervollständigung der Umsetzung, nach dem Auflösen des Sulfonats noch einige Minuten bis zu 2 Stunden nachreagieren zu lassen. Noch längere Reaktionszeiten sind weder erforderlich noch erwünscht, da mit zunehmender Dauer auch der Anteil an Sulfamat ansteigt.

Bei Temperaturen unter 85° C sind nur wenig längere Reaktionszeiten notwendig. Lediglich bei Temperaturen unter 40° C sollte die Reaktionsdauer wenigstens 10 Minuten betragen und der pH-Wert größer als 10 sein.

Das erfindungsgemäße Verfahren kann sowohl diskontinuierlich wie kontinuierlich durchgeführt werden. Bei kontinuierlicher Verfahrensweise werden Alkalihydroxid, vorzugsweise als konzentrierte Lösung, und Nitrilotrisulfonat gleichzeitig und gleichmäßig dem Reaktor zugeführt. Das Verhältnis der Reaktionspartner kann über den pH-Wert gesteuert werden. Falls als Reaktor ein Rührkessel gewählt wird, kann dabei eine Suspension von Alkali-Nitrilotrisulfonat und Alkali-Imidodisulfonat auftreten.

Wenn bei der Hydrolyse der pH-Wert der wäßrigen Phase über 10 gehalten wird, so fällt ein Salz der Form $MN(SO_3M)_2$ aus. Bei pH-Werten zwischen 10 und 7 werden steigende Mengen des neutralen Salzes $HN(SO_3M)_2$ gebildet.

Die Zugabe des Ammoniumsalzes muß bei einer vorgegebenen Menge Alkalihydroxid spätestens dann beendet werden, wenn der pH-Wert auf 7 abgesunken ist.

Das gebildete Ammoniak kann während der Reaktion bei Normaldruck oder im Vakuum mit oder ohne Ausblasen durch Inertgas oder durch Abdestillieren des Lösungsmittels entfernt werden. Restliche Ammoniakmengen werden beim Aufarbeiten und Trocknen des Produktes entfernt. Das Ammoniak kann erneut zur Herstellung von Ammonium-Nitrilotrisulfonat eingesetzt werden.

Die Isolierung des Endprodukts erfolgt am besten durch Abtrennen der festen Phase von der überstehenden Lösung, insbesondere nach Abkühlen des Reaktionsgemisches, z. B. durch Filtrieren oder Zentrifugieren. Anschließend wird, gegebenenfalls nach Waschen, getrocknet. Man kann auch die abgetrennte flüssige Phase oder das Reaktionsgemisch eindampfen, insbesondere durch Sprühtrocknen. Dabei ist es auch möglich vor dem Sprühtrocknen die flüssige Phase mit Lösungen oder Suspensionen anderer Stoffe zu vermischen, die übliche Bestandteile von Waschmitteln bilden (z. B.: Natriumcarbonat, -silikat und -polyphosphat). Diese basischen Stoffe verhindern gleichzeitig beim Trocknungsvorgang, daß der Feststoff infolge Hydrolyse sauer reagiert und sich dann autokatalytisch zersetzt. Man kann auch der Reaktionsmischung ein mit Wasser unbegrenzt mischbares organisches Lösungsmittel zusetzen und so die Alkalisalze ausfällen. Die Mutterlauge kann grundsätzlich wieder als Lösungsmittel für einen neuen Ansatz verwendet oder zu Ammoniumsulfat aufgearbeitet werden.

Das nach dem Trocknen anfallende Produktgemisch kann als Verunreinigungen Alkalisalze der Schwefelsäure und der Amidosulfonsäure enthalten. Diese Verunreinigungen können durch Umkristallisieren weitgehend entfernt werden. Im allgemeinen ist eine Reinigung jedoch nicht notwendig und das Salz kann direkt als Builder in Waschmitteln eingesetzt werden.

Die Erfindung wird durch die folgenden Beispiele näher erläutert.

## Versuchsbeschreibung

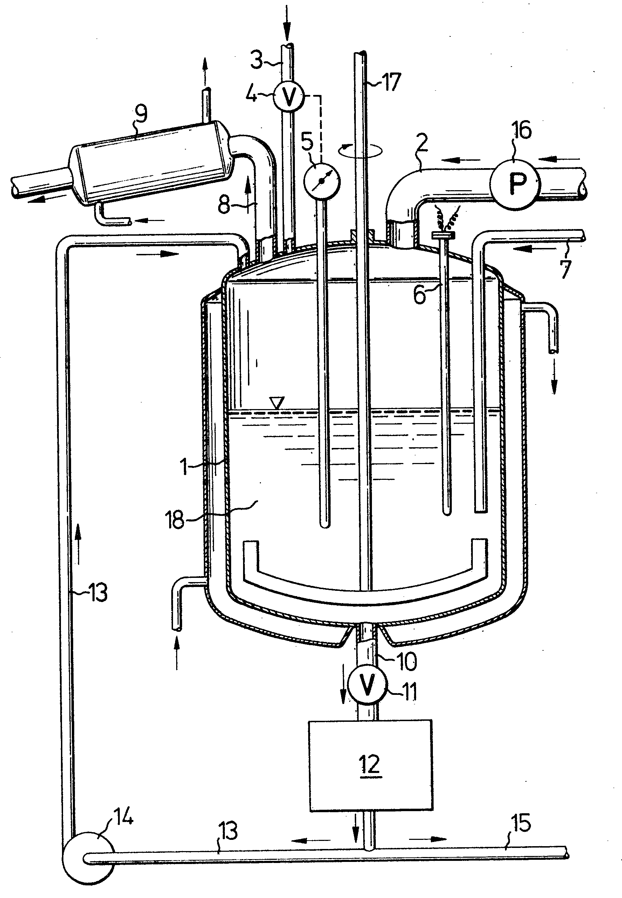

Die verwendete Apparatur ist in der Figur dargestellt.

Sie besteht im wesentlichen aus einem Doppelmantelgefäß (1) mit Rührer (17), das zu Beginn der Reaktion mit wenig konzentrierter Alkalilauge gefüllt wird. Die Zugabe des Ammonium-Nitrilotrisulfonats erfolgt über Stutzen (2). Die Dosierung wird im Fall eines trockenen Feststoffs mit einer Schnecke und bei einem feuchten breiigen Feststoff oder einer Lösung mit einer Pumpe (16) durchgeführt. Die Zugabe der Lauge erfolgt über Leitung (3), die Dosierung mit Ventil (4). Bei vorgegebener Zugabegeschwindigkeit des Ammonium-Nitrilotrisulfonats wird die Lauge so zugegeben, daß der pH-Wert der Lösung 11 bis 12 beträgt. Das pH-Meßgerät (5) regelt Ventil (4). Durch externe Heizung wird die Reaktionsmischung bei etwa 90—100°C gehalten; die Temperatur wird mit dem Thermometer (6) kontrolliert. Über Leitung (7) wird Stickstoff in die Reaktionsmischung eingeblasen, über Leitung (8) werden Ammoniak, Stickstoff und Wasserdampf abgeführt. Der Wasserdampf kondensiert im Kühler (9).

Nachdem ein vorgegebener Füllstand erreicht ist und das Reaktionsgemisch (18) eine breiige Substanz geworden ist, wird kontinuierlich über Leitung (10) und Ventil (11) ein Teil der Reaktionsmischung (18) abgezogen. Von der Suspension wird möglichst direkt, ohne Zwischenkühlung der Feststoff mit Hilfe einer Nutsche oder Zentrifuge (12) abgetrennt und anschließend getrocknet. Die Mutterlauge wird teilweise über Leitung (13) und Pumpe (14) dem Reaktionsgefäß wieder zugeführt.Die restliche Mutterlauge wird über Leitung (15) ausgeschleust.

## Beispiel 1

Das Doppelmantel-Rührgefäß hat ein Volumen von 6 l. Zu Beginn der Reaktion wird 1 l 50%ige Natronlauge vorgelegt und durch externe Heizung unter Rühren auf 70—100°C erwärmt. Diese Temperatur wird während des gesamten Versuches eingehalten. Stickstoff wird mit einer Geschwindigkeit von ca. 100 l/h eingeblasen. Es werden pro Stunde ca. 2 kg breiiges Ammonium-nitrilo-trisulfonat (ca. 10—15% Wasser; Gehalt im trockenen Feststoff ca. 80—90%) zugegeben und gleichzeitig ca. 2 kg/h 50%ige Natronlauge. Während des gesamten Versuchs liegt der pH-Wert zwischen 10 und 12. Wasserdampf und Ammoniak werden ausgetrieben und man erhält nach der Kondensation eine konzentrierte Ammoniaklösung ($\rho$=0,924—0,962 g/cm$^3$) und gasförmiges Ammoniak. Im Rührgefäß geht die anfangs klare Lösung in eine Suspension über. Heizung, Zugabe von Edukten und Ablassen der Produktmischung werden so geregelt, daß die Reaktionsmischung ein gut rührbarer Brei ist. Dieser wird kontinuierlich entnommen, filtriert und getrocknet. Innerhalb 32 h erhält man aus 70,9 kg feuchtem Ammoniumsalz der Nitrilotrisulfonsäure und 76,4 kg 50%iger Natronlauge 69,5 kg getrocknetes Natriumsalz. Die Zusammensetzung des ungereinigten Produktes wird durch Röntgenaufnahmen, Titration mit Natriumnitritlösung, Schwefelsäure und Natronlauge sowie durch Sulfatfällung bestimmt. Danach enthält das Produkt 40% $NaN(SO_3Na)_2$, 5% $H_2NSO_3Na$, 2% $N(SO_3Na)_3$ und 50% $Na_2SO_4$. Eine 10%ige wäßrige Lösung hat einen pH-Wert von 9,75.

## Beispiel 2

Das Doppelmantel-Rührgefäß hat ein Volumen von 1 l. Es werden 30 ml Natronlauge (50%ig) vorgelegt. Innerhalb 30 Minuten werden bei 80°C und pH 10,5—11,5 200 g Ammonium-nitrilo-trisulfonat (Gehalt 80—90%, Rest weitere Ammoniumsalze) mit 165 ml NaOH (50%ig) umgesetzt. Das Rohprodukt wird anschließend im Vakuum bei 80°C getrocknet. Man erhält 235,4 g: 6% $N(SO_3Na)_3$, 40% $NaN(SO_3Na)_2$, 9% $H_2NSO_3Na$. Eine 10%ige Lösung hat einen pH-Wert von 12,0.

Beispiel 3

Wie in Beispiel 2 werden 200 g Ammonium-nitrilo-trisulfonat bei 35—57°C und pH 9—11 mit 140 ml Natronlauge (50%ig) umgesetzt. Das Rohprodukt wird anschließend bei 40°C im Vakuum getrocknet. Man erhält 227,4 g Produkt: 8% $N(SO_3Na)_3$, 36% $NaN(SO_3Na)_2$, 9% $H_2NSO_3Na$. Eine 10%ige wäßrige Lösung hat einen pH-Wert von 8,05.

Beispiel 4

Wie in Beispiel 2 werden 400 g Ammonium-nitrilo-trisulfonat bei 18 bis 31°C und pH 11,0—11,5 mit 385 ml 50%iger Kalilauge innerhalb 35 Minuten umgesetzt. Das Rohprodukt wird anschließend bei 70°C im Vakuum getrocknet. Man erhält 412,5 g trockenes Produkt: 39% $N(SO_3K)_3$, 44% $KN(SO_3K)_2$, 2% $H_2NSO_3K$.

**Patentansprüche**

1. Verfahren zur Herstellung von Alkalisalzen der Imidodisulfonsäure oder eines Gemisches von Alkalisalzen der Imidodisulfonsäure und der Nitrilotrisulfonsäure, Amidosulfonsäure und Schwefelsäure aus Ammoniumnitrilotrisulfonat, dadurch gekennzeichnet, daß man Ammoniumnitrilotrisulfonat in fester oder gelöster Form zu einer wäßrigen Lösung von Alkalihydroxid gibt, die mindestens 3 Mol Alkalihydroxid pro Mol zuzugebendes Ammoniumnitrilotrisulfonat enthält, und umsetzt.

2. Verfahren nach Anspruch 1, dadurch gekennzeichnet, daß man die festen Alkalisalze nach Erreichen des gewünschten Grades von Hydrolyse isoliert.

3. Verfahren nach Anspruch 2, dadurch gekennzeichnet, daß man die abgetrennten festen Alkalisalze trocknet.

4. Verfahren nach Anspruch 1, dadurch gekennzeichnet, daß man die anfallenden flüssigen Reaktionsgemische oder die flüssige Phase über den festen Alkalisalzen eindampft.

5. Verfahren nach Anspruch 4, dadurch gekennzeichnet, daß man die flüssige Phase durch Sprühtrocknen eindampft.

6. Verfahren nach Anspruch 1, dadurch gekennzeichnet, daß man die flüssigen Reaktionsgemische oder die von festen Alkalisalzen befreite flüssige Phase mit einem mit Wasser leicht mischbaren organischen Lösungsmittel versetzt und man die ausfallenden Alkalisalze von der flüssigen Phase abtrennt.

7. Verfahren nach Anspruch 1, dadurch gekennzeichnet, daß man bei Temperaturen von 20 bis 120°C arbeitet.

**Claims**

1. A process for the preparation of alkali metal salts of imidodisulfonic acid or a mixture of alkali metal salts of imidodisulfonic acid and of nitrilotrisulfonic acid, amidosulfonic acid and sulfuric acid, from ammonium nitrilotrisulfonate, which comprises adding ammonium nitrilotrisulfonate, in a solid form or in a dissolved form to an aqueous solution of an alkali metal hydroxide, which contains at least 3 moles of an alkali metal hydroxide per mole of ammonium nitrilotrisulfonate to be added and reacting it.

2. A process as claimed in claim 1, wherein the solid alkali metal salts are isolated after a desired degree of hydrolysis has been reached.

3. A process as claimed in claim 2, wherein the solid alkali metal salts isolated are dried.

4. A process as claimed in claim 1, wherein the liquid reaction mixtures obtained or the liquid phase above the solid alkali metal salt is evaporated.

5. A process as claimed in claim 4, wherein the liquid phase is evaporated by spray-drying.

6. A process as claimed in claim 1, wherein an organic solvent which is readily miscible with water is added to the liquid reaction mixtures or to the liquid phase, from which solid alkali metal salts have been removed, and the precipitating alkali metal salts are separated from the liquid phase.

7. A process as claimed in claim 1, wherein temperatures of 20 to 120°C are used.

**Revendications**

1. Procédé de préparation de sels métaux alcalins de l'acide imino-disulfonique, ou d'un mélange de sels de métaux alcalins de l'acide imino-disulfonique et de l'acide nitrilo-trisulfonique, de l'acide sulfamique et de l'acide sulfurique, à partir du nitrilo-trisulfonate d'ammonium, procédé caractérisé en ce qu'on ajoute le nitrilo-trisulfonate d'ammonium à l'état solide ou à l'état dissous à une solution

aqueuse d'un hydroxyde de métal alcalin qui contient au moins 3 moles d'hydroxyde de métal alcalin par mole du nitrilo-trisulfonate d'ammonium à ajouter, et on fait réagir.

2. Procédé selon la revendication 1, caractérisé en ce qu'on isole les sels de métaux alcalins solides après que le taux d'hydrolyse souhaité a été atteint.

3. Procédé selon la revendication 2, caractérisé en ce qu'on sèche les sels de métaux alcalins solides qui ont été séparés.

4. Procédé selon la revendication 1, caractérisé en ce qu'on évapore les mélanges réactionnels liquides obtenus ou la phase liquide qui se trouve au-dessus des sels de métaux alcalins solides.

5. Procédé selon la revendication 4, caractérisé en ce qu'on évapore la phase liquide par séchange avec pulvérisation.

6. Procédé selon la revendication 1, caractérisé en ce qu'on ajoute au mélange réactionnel liquide, ou à la phase liquide débarrassée des sels de métaux alcalins solides, un solvant organique très miscible à l'eau, et on sépare de la phase liquide les sels de métaux alcalins qui ont précipité.

7. Procédé selon la revendication 1, caractérisé en ce qu'on opère à des températures de 20 à 120° C.

3
4
V
17
9
5
16
2
P
8
7
6
1
18
13
10
V
11
12
14
13
15